# EUROPÄISCHE PATENTSCHRIFT

(11) **EP 1 953 503 B1**
(45) Veröffentlichungstag und Bekanntmachung des Hinweises auf die Patenterteilung: **10.03.2010**
(21) Anmeldenummer: 07000174.8
(22) Anmeldetag: 05.01.2007
(51) Int. Cl.: G01D 5/04, F16H 57/12

(54) **Drehgeber**
Rotary encoder
Encodeur

(43) Veröffentlichungstag der Anmeldung: 06.08.2008
(73) Patentinhaber: SICK STEGMANN GmbH, 78166 Donaueschingen (DE)
(72) Erfinder: Siraky, Josef, 78166 Donaueschingen (DE); Hartlieb, Rolf, 78050 Villingen-Schwenningen (DE)
(74) Vertreter: Patentanwälte Westphal, Mussgnug & Partner

(56) Entgegenhaltungen:
- DE-A1- 10 060 574
- DE-A1- 10 158 223
- GB-A- 2 224 554

## Beschreibung

Die Erfindung betrifft einen Drehgeber gemäß dem Oberbegriff des Patentanspruchs 1.

Drehgeber dienen zur Messung der Winkelposition eines rotierenden Teiles und gegebenenfalls von Größen, die von der Winkelposition abhängen, wie z.B. Drehgeschwindigkeit, Drehbeschleunigung und dergleichen. Mit einer Antriebswelle, deren Winkelposition zu messen ist, ist ein Rotor verbunden, dessen Winkelposition innerhalb einer Umdrehung optisch, magnetisch, kapazitiv oder induktiv abgetastet und erfasst wird. Um die Winkelposition über mehrere Umdrehungen messen zu können, ist eine Multiturn-Einheit vorgesehen, die die Anzahl der Umdrehungen des Rotors misst. Die Multiturn-Einheit ist mit dem Rotor über ein Untersetzungsgetriebe gekoppelt.

Bei einem solchen Drehgeber, wie er z.B. aus der DE 100 60 574 A1 bekannt ist, sind sowohl die Antriebswelle, die den Rotor trägt, als auch die Multiturn-Einheit in dem Gehäuse des Drehgebers gelagert, so dass für die Getriebeverbindung zwischen dem Rotor und der Multiturn-Einheit ein mit dem Rotor verbundenes treibendes Stirnrad und ein getriebenes Stirnrad der Multiturn-Einheit stets in präzisem Zahneingriff stehen.

Es sind auch Drehgeber bekannt (z.B. DE 101 58 223 A1) bei welchen auf eine eigene Lagerung der den Rotor tragenden Antriebswelle in dem Gehäuse des Drehgebers aus Kostengründen verzichtet wird. Der Drehgeber wird unmittelbar mit dem Rotor auf die zu messende Antriebswelle montiert. Da der Rotor auf der in das Gehäuse ragenden, jedoch nicht in dem Gehäuse gelagerten Antriebswelle sitzt, während die Multiturn-Einheit in dem Gehäuse gelagert ist, tritt das Problem auf, dass der Zahneingriff zwischen dem mit dem Rotor verbundenen treibenden Stirnrad und dem getriebenen Stirnrad Einbautoleranzen aufweist, die zu einem verstärkten Verschleiß der Verzahnung führen können.

Der Erfindung liegt die Aufgabe zu Grunde, einen Drehgeber der eingangs genannten Gattung so zu verbessern, dass ein undefiniertes Spiel in der Zahnrad-Getriebeverbindung zwischen dem Rotor und der Multiturn-Einheit minimiert wird.

Diese Aufgabe wird erfindungsgemäß gelöst durch einen Drehgeber mit den Merkmalen des Patentanspruchs 1.

Vorteilhafte Ausführungen der Erfindung sind in den Unteransprüchen angegeben.

Bei dem erfindungsgemäßen Drehgeber sind das mit dem Rotor verbundene treibende Stirnrad und das durch dieses getriebene Stirnrad der nachgeschalteten Multiturn-Einheit so ausgebildet, dass jeweils jeder zweite Zahn des einen dieser Stirnräder bis auf den Radius des Teilkreises der Verzahnung gekürzt ist, während bei dem anderen dieser Stirnräder jeweils der Grund jeder zweiten Zahnlücke bis auf den Radius des Teilkreises aufgefüllt ist. Dabei ist die Verzahnung der Stirnräder als Schrägverzahnung ausgebildet, wobei diese Schrägverzahnung eine einfache oder auch eine doppelte Schrägverzahnung sein kann. Der Schrägungswinkel und der Modul dieser Schrägverzahnungen ist dabei so gewählt, dass die beiden Stirnräder jeweils mit mindestens einem Zahn in Eingriff stehen.

Durch diese Ausbildung der Verzahnung wird bewirkt, dass die beiden Stirnräder jeweils mit mindestens einem vollständigen Zahn und einer vollständigen Zahnlücke ineinander greifen, um die exakte Drehbewegung zu übertragen. Weiter sitzen die beiden Stirnräder ebenso zu jedem Zeitpunkt mit einem gekürzten Zahn auf einer aufgefüllten Zahnlücke auf. Die Flächen dieser aufeinander aufsitzenden Bereiche liegen dabei jeweils in dem Teilkreis der Verzahnung, der dem Wälzkreis der aufeinander abrollenden Verzahnungen entspricht. In diesen Bereichen der gekürzten Zähne und der aufgefüllten Zahnlücken wälzen sich die zwei Stirnräder daher in einer abrollenden Bewegung aneinander ab, wodurch die beiden ineinander greifenden Stirnräder auch im Bereich ihrer vollständigen Zähne bzw. Zahnlücken exakt im Wälzkreis der Verzahnungen in Eingriff kommen.

Diese gegenseitige Abstützung der Stirnräder in den Teilkreis- bzw. Wälzkreisflächen bewirkt, dass der Berührungspunkt zwischen den Zahnflanken der vollständigen, den Zahneingriff bewirkenden Zähne nicht infolge von Einbautoleranzen radial wandern kann, was zu einem verschleißfördernden radialen Gleiten der Zahnflanken im Berührungspunkt führen würde.

Um diese gegenseitige rollende Abstützung der ineinander greifenden Stirnräder zuverlässig zu gewährleisten, ist es vorteilhaft, wenn die beiden Stirnräder mit einer Federkraft gegeneinander vorgespannt sind, die in der Richtung der Verbindungslinie der Achsen dieser Stirnräder wirksam ist.

Im Folgenden wird die Erfindung anhand eines in der Zeichnung dargestellten Ausführungsbeispiels näher erläutert. Es zeigen
- Fig. 1: eine radiale Draufsicht auf eines der Stirnräder,
- Fig. 2: eine perspektivische Ansicht des einen Stirnrades mit einer Ausschnittvergrößerung,
- Fig. 3: eine perspektivische Ansicht des anderen Stirnrades mit einer Ausschnittvergrößerung und
- Fig. 4: eine perspektivische Ansicht der ineinander greifenden Stirnräder mit einer Ausschnittvergrößerung.

Ein Drehgeber weist ein Gehäuse auf, welches im Allgemeinen ortsfest, z.B. an einem Motor montiert wird. Eine Antriebswelle, deren Winkelposition zu messen ist, z.B. die Welle des Motors, ragt in das Gehäuse des Drehgebers. Auf der Antriebswelle sitzt ein Rotor, der z.B. inkremental oder absolut kodiert ist und dessen Winkelposition innerhalb einer Umdrehung des Rotors durch eine im dem Gehäuse angeordnete Abtastung erfasst wird. Weiter ist in dem Gehäuse eine Multiturn-Einheit gelagert, die die Anzahl der Umdrehungen des Rotors misst, um die Winkelposition über mehrere Umdrehungen erfassen zu können.

Insoweit entspricht der Drehgeber dem bekannten Stand der Technik. Der Drehgeber kann dabei in jeder beliebigen aus dem Stand der Technik bekannten Weise aufgebaut sein. Eine Darstellung und Beschreibung des Drehgebers in diesen an sich bekannten Merkmalen ist daher nicht erforderlich.

Um die Anzahl der Umdrehungen des Rotors mittels der Multiturn-Einheit zu erfassen, ist drehfest mit dem Rotor ein erstes schrägverzahntes Stirnrad 10 verbunden. Dieses Stirnrad 10 steht als treibendes Zahnrad in Zahneingriff mit einem getriebenen zweiten schrägverzahnten Stirnrad 12, welches das Eingangszahnrad des Getriebes der Multiturn-Einheit ist. Die Verzahnungen 14 der beiden Stirnräder 10 und 12 entsprechen einander in dem Schrägungswinkel und dem Modul.

Gegenüber einer herkömmlichen Verzahnung 14 sind die Zähne 16 und die Zahnlücken 18 der Verzahnung 14 bei den Stirnrädern 10 und 12 in folgender Weise modifiziert.

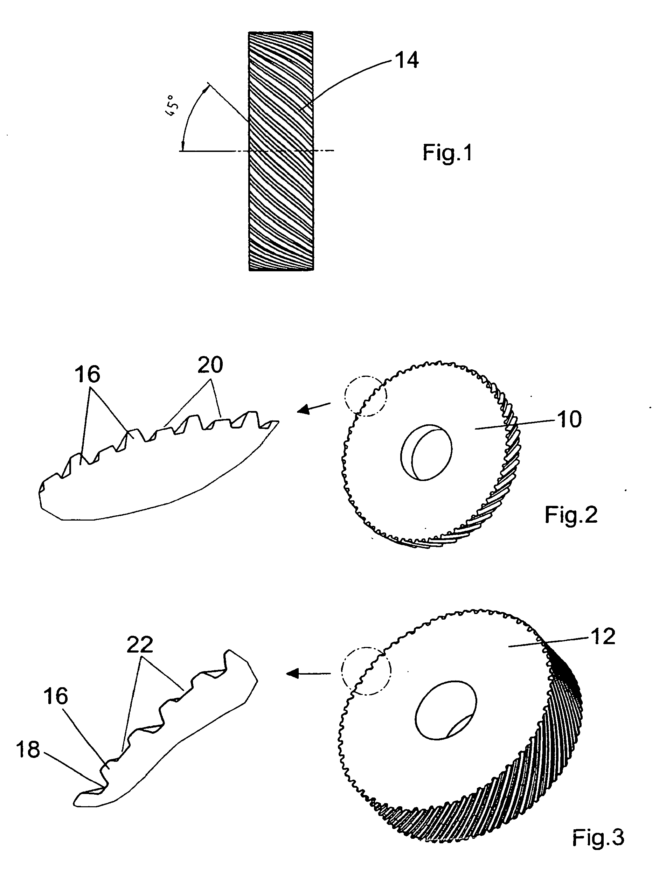

Bei einem der Stirnräder, im dargestellten Beispiel bei dem Stirnrad 10 ist jeweils jeder zweite Zahn 16 in der Kopfhöhe bis auf den Radius des Teilkreises gekürzt, wie dies bei den Zähnen 20 in der vergrößerten Ausschnittsdarstellung der Figur 2 zu sehen ist. Bei dem anderen Stirnrad, im dargestellten Beispiel dem zweiten Stirnrad 12 ist dagegen der Grund jeder zweiten Zahnlücke 22 bis auf den Radius des Teilkreises aufgefüllt, wie dies in der Ausschnittvergrößerung der Figur 3 zu erkennen ist.

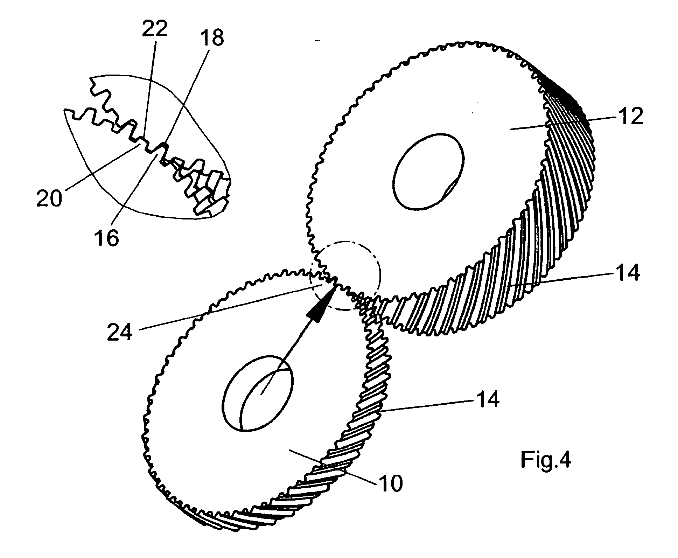

Wenn die Stirnräder 10 und 12 in Eingriff sind, wie dies in Figur 4 gezeigt ist, so greifen jeweils vollständige Zähne 16 in vollständige Zahnlücken 18, während um eine Teilung versetzt jeweils ein gekürzter Zahn 20 auf eine gefüllte Zahnlücke 22 trifft. Die ineinander greifenden vollständigen Zähne 16 und Zahnlücken 18 bewirken den Drehantrieb des getriebenen Stirnrades 12 durch das treibende Stirnrad 10. Die gekürzten Zähne 20 und die gefüllten Zahnlücken 22 rollen mit sich in radialer Richtung abstützenden Flächen aneinander ab, die in dem Teilkreis liegen, der mit dem Wälzkreis der Verzahnung 14 zusammenfällt, wie dies beispielsweise bei einer EvolventenVerzahnung der Fall ist.

Damit die Verzahnungen 14 der Stirnräder 10 und 12 trotz der gekürzten Zähne 20 und der gefüllten Zahnlücken 22 stets in Eingriff stehen, sind der Schrägungswinkel α der Verzahnung 14 und deren Modul so gewählt, dass stets wenigstens ein Zahn 16 mit einer vollständigen Zahnlücke 18 in Eingriff ist, wie dies in der Ausschnittvergrößerung der Figur 4 ersichtlich ist. In dem Beispiel der Figur 1 ist der Schrägungswinkel α mit 45° angegeben.

Die vollständigen Zähne 16 und Zahnlücken 18 bewirken den Drehantrieb. Auf Grund der gekürzten Zähne 20 und der gefüllten Zahnlücken 22 stützen sich die Stirnräder 10 und 12 stets rollend mit ihrem Wälzkreis aneinander ab, so dass stets ein optimaler Zahneingriff unabhängig von Spieltoleranzen gewährleistet ist. Um zusätzlich sicherzustellen, dass die Stirnräder 10 und 12 stets in rollender Anlage mit ihren gekürzten Zähnen 20 und gefüllten Zahnlücken 22 stehen, können die Stirnräder 10 und 12 zusätzlich durch eine Federkraft vorgespannt sein, die die Stirnräder 10 und 12 in der Richtung der Verbindungslinie ihrer Achsen gegeneinander drückt, wie dies in Figur 4 durch den Pfeil 24 angedeutet ist.

## Patentansprüche

1. Drehgeber mit einem Gehäuse, mit einem Rotor, der drehfest mit einer in das Gehäuse ragenden zu messenden Antriebswelle verbunden ist und dessen Winkelposition innerhalb einer Umdrehung gemessen wird, und mit einer Multiturn-Einheit, die in dem Gehäuse gelagert ist und die Anzahl der Umdrehungen des Rotors misst, wobei die Multiturn-Einheit mit dem Rotor über ein Zahnradgetriebe gekoppelt ist, welches ein mit dem Rotor verbundenes treibendes Stirnrad (10) und ein getriebenes Stirnrad (12) der Multiturn-Einheit aufweist,
**dadurch gekennzeichnet, dass** bei einem der Stirnräder (10) der Kopf jedes zweiten Zahnes (16) bis auf den Teilkreis gekürzt ist, dass bei dem anderen Stirnrad (12) der Grund jeder zweiten Zahnlücke (18) bis auf den Teilkreis aufgefüllt ist und dass die Stirnräder (10, 12) schräg verzahnt sind, wobei der Modul und der Schrägungswinkel (α) der Schrägverzahnung (14) so bestimmt sind, dass stets wenigstens ein Zahn (16) in Eingriff ist.

2. Drehgeber nach Anspruch 1,
**dadurch gekennzeichnet, dass** die Stirnräder (10, 12) durch eine Federkraft gegen einander vorgespannt sind, die in der Richtung der Verbindungslinie ihrer Achsen wirkt.

3. Drehgeber Anspruch 1 oder 2,
**dadurch gekennzeichnet, dass** die Antriebswelle ohne eigene Lagerung in das Gehäuse ragt.

4. Drehgeber nach einem der Ansprüche 1 bis 3,
**dadurch gekennzeichnet, dass** die Schrägverzahnung (14) der Stirnräder (10, 12) eine Evolventen-Verzahnung ist.

## Claims

1. Rotary encoder comprising a housing, a rotor which is connected in rotation to a drive shaft to be measured that projects into the housing and the angular position of which within one revolution is measured, and a multi-turn unit which is mounted in the housing and which measures the number of revolutions of the rotor, wherein the multi-turn unit is coupled to the rotor via a toothed wheel gear mechanism which comprises a driving spur wheel (10) connected to the rotor and a driven spur wheel (12) of the multi-turn unit, **characterised in that** on one of the spur wheels (10) the head of every second tooth (16) is shortened up to the pitch circle, **in that** on the other spur wheel (12) the base of every second tooth gap (18) is filled up to the pitch circle, and **in that** the spur wheels (10, 12) are helically toothed, wherein the modulus and the helix angle (α) of the helical toothing (14) are determined in such a way that always at least one tooth (16) is in engagement.

2. Rotary encoder according to claim 1, **characterised in that** the spur wheels (10, 12) are biased against one another by means of a spring force which acts in the direction of the connection line of their axes.

3. Rotary encoder according to claim 1 or 2, **characterised in that** the drive shaft projects into the housing without a dedicated bearing.

4. Rotary encoder according to one of claims 1 to 3, **characterised in that** the helical toothing (14) of the spur wheels (10, 12) is an involute toothing.

## Revendications

1. Capteur de rotation comportant un boîtier, un rotor solidaire en rotation d'un arbre d'entraînement à mesurer, pénétrant dans le boîtier et dont on mesure la position angulaire au cours d'une rotation, ainsi qu'une unité multitour logée dans le boîtier et qui mesure le nombre de rotations du rotor,
- l'unité multitour étant couplée au rotor par une transmission à engrenage composée d'une roue dentée droite (10), menante, reliée au rotor et d'une roue dentée droite (12), menée,
**caractérisé en ce que**
- pour l'une des roues dentées droites (10), la tête de chaque seconde dent (16) est réduite jusqu'au cercle primitif,
- pour l'autre roue dentée droite (12), le fond de chaque second entre-dent (18) est rempli jusqu'au cercle primitif, et
- les roues dentées droites (10, 12) sont à denture hélicoïdale, le module et l'angle d'inclinaison (α) de la denture hélicoïdale (14), étant définis pour que toujours au moins une dent (16) soit en prise.

2. Capteur de rotation selon la revendication 1,
**caractérisé en ce que**
les roues dentées droites (10, 12) sont précontraintes l'une contre l'autre par la force d'un ressort agissant dans la direction de la ligne passant par leurs axes.

3. Capteur de rotation selon la revendication 1 ou 2,
**caractérisé en ce que**
l'arbre d'entraînement pénètre dans le boîtier sans être porté par un palier qui lui soit propre.

4. Capteur de rotation selon l'une des revendications 1 à 3,
**caractérisé en ce que**
la denture hélicoïdale (14) des roues dentées droites (10, 12) est une denture à développante.
